(19) **Europäisches Patentamt**

**European Patent Office**

**Office européen des brevets**

(11) **EP 0 815 155 B1**

(12) **EUROPEAN PATENT SPECIFICATION**

(45) Date of publication and mention
of the grant of the patent:
**07.08.2002 Bulletin 2002/32**

(51) Int Cl.$^7$: **C08G 61/08**

(86) International application number:
**PCT/JP97/00059**

(21) Application number: **97900421.5**

(22) Date of filing: **16.01.1997**

(87) International publication number:
**WO 97/26291 (24.07.1997 Gazette 1997/32)**

(54) **METATHESIS POLYMERIZATION CATALYST SOLUTION AND SYSTEM FOR PREPARING CROSS-LINKED POLYMERS**

**KATALYSATORLÖSUNG ODER KATALYSATORSYSTEM FÜR METATHESEPOLYMERISATION ZUR HERSTELLUNG VON VERNETZTEN POLYMEREN**

**SOLUTION A CATALYSEUR DE POLYMERISATION PAR METATHESE ET SYSTEME DE PREPARATION DE POLYMERES RETICULES**

(84) Designated Contracting States:
**DE FR GB**

(30) Priority: **18.01.1996 JP 2345096**
**16.02.1996 JP 5258496**

(43) Date of publication of application:
**07.01.1998 Bulletin 1998/02**

(73) Proprietor: **Teijin-Metton Kabushiki Kaisha Chiyoda-ku, Tokyo 100 (JP)**

(72) Inventors:
• **ENDO, Zen-ichiro, Teijin-Metton K.K. Iwakuni-shi, Yamaguchi 740 (JP)**
• **YAMADA, Takeyoshi, Teijin-Metton K.K. Iwakuni-shi, Yamaguchi 740 (JP)**

(74) Representative: **Hallybone, Huw George et al Carpmaels and Ransford, 43 Bloomsbury Square London WC1A 2RA (GB)**

(56) References cited:
**EP-A- 0 181 640**     **EP-A- 0 304 900**
**EP-A- 0 480 447**     **GB-A- 1 519 862**

Remarks:
The file contains technical information submitted after the application was filed and not included in this specification

EP 0 815 155 B1

**Description**

BACKGROUND OF THE INVENTION

1. Field of the Invention

The present invention relates to a novel metathesis polymerization catalyst solution, and to the combination of (i) a monomer solution A (solution A) comprising a metathesis polymerizable cyclic olefin and a metathesis polymerization catalyst solution, and (ii) a monomer solution B (solution B) comprising a metathesis polymerizable cyclic olefin and an alkylaluminum compound as an activator component of the metathesis polymerization catalyst system. Monomer solutions A and B are also called reactive solutions. The present invention also relates to a crosslinked polymer composition that is formed using the above described catalyst system.

More specifically, this invention relates to (1) a metathesis polymerization catalyst solution formed with an ether compound and a phenol compound which act on $WOCl_4$ and/or $MoOCl_3$ during preparation of the metathesis polymerization catalyst solution, wherein a metathesis polymerizable cyclic olefin is used as a solvent, (2) a combination of the catalyst solution described in (1) above and a metathesis polymerization catalyst activator solution comprising an alkylaluminum compound, (3) a combination of the metathesis polymerizable monomer solutions formed from the catalyst solution and the catalyst activator solution, respectively, and (4) a crosslinked polymer composition. This invention also provides a bulk-polymerized crosslinked polymer composition formed by a reaction injection molding method having markedly improved physical properties and functions.

2. Description of the Related Art

Known methods in this field of art include a method of obtaining a crosslinked polymer composition which is formed by mixing (i) a monomer solution comprising a metathesis polymerizable cyclic olefin and a catalyst component of a metathesis polymerization catalyst system (also called a double decomposition catalyst system), and (ii) a monomer solution comprising a metathesis polymerizable cyclic olefin and an activator component, and by polymerizing and crosslinking this mixture in a mold into which it is injected as described in unexamined published Japanese Application No. 28451/1991. This reaction injection molding method provides excellent advantages. Namely, (1) an easily available monomer can be used as a raw material; (2) monomer viscosity and injection molding pressure are low; (3) a shorter molding cycle is ensured by fast polymerization and crosslinking; (4) compositions such as a large-sized molded article can be formed with relative ease; and (5) the composition exhibits excellent balance between rigidity and impact strength.

However, this crosslinked polymer composition has the following disadvantages. (1) Dicyclopentadiene is used as a metathesis polymerizable cyclic olefin. When metathesis polymerization is performed using the catalyst described in unexamined published Japanese Application No. 28451/1991, the heat resistance is as low as 100 °C, thereby limiting the scope of its application. (2) The scope of its application is also limited by a substantial reduction in impact strength when a bulky metathesis polymerizable cyclic olefin such as tricyclopentadiene is subjected to metathesis polymerization (as described in examined Japanese Patent Publication No. 62613/1993) in an effort to improve heat resistance. (3) Since the crosslinked polymer composition has a uniquely offensive odor, its application is often limited to outdoor use. When used indoors and a question on the odor is raised, the crosslinked polymer composition must be covered by a coating to thereby prevent the unpleasant odor from proliferating. European Patent Application No. 0480447 describes a process for preparing a polymer comprising contacting a strained ring polycyclic polyolefin with a substantially pure tungsten complex $WOX_{4-x}(OAR)_x$. The pure tungsten complex is prepared in solid form, followed by its dissolution in the stained ring polycyclic olefin, for example, dicyclopentadiene monomer before polymerisation occurs. A stabilizer such as an ether compound can be added to the solution of the ready formed tungsten complex in, for example, dicyclopentadiene.

**SUMMARY OF THE INVENTION**

The present inventors conducted studies to solve the above-described problems of the prior art. The present invention especially relates to a metathesis polymerization catalyst solution used in a method of obtaining a crosslinked polymer composition which is formed by (1) mixing a monomer solution A (solution A) comprising a metathesis polymerizable cyclic olefin and a catalyst component of a metathesis polymerization catalyst system, and a monomer solution B (solution B) comprising a metathesis polymerizable cyclic olefin and an alkylaluminum compound as an activator component of the metathesis polymerization catalyst system, and (2) polymerizing and crosslinking this mixture in a mold into which said mixture is injected.

Namely, the present inventors discovered that cationic polymerization is prevented if an ether compound and a phenol compound are made to act on $WOCl_4$ and/or $MoOCL_3$ and a metathesis polymerizable cyclic olefin is used as a solvent. This allows for the use of a metathesis polymerizable cyclic olefin which could not previously have been used as a solvent for catalyst preparation due to cationic polymerization caused by the catalyst. The inventors also discovered that the crosslinked polymer composition using this polymerization catalyst solution provides a substantial improvement in heat resistance with no reduction in impact strength. The present inventors discovered that prevention of the cationic polymerization is more effective when a chain ether is added as the ether compound. The present inventors also discovered that a chain ether compound is preferably used as the ether compound which serves as a reaction velocity moderator when added to the metathesis polymerization catalyst activator solution.

Furthermore, the present inventors discovered that use of the metathesis polymerizable cyclic olefin alone in the presence of the ether compound as a solvent for preparing the metathesis polymerization catalyst solution eliminates the need for using a solvent which does not take part in the metathesis polymerization (e.g., toluene). This reduces the fumes and offensive odor produced during the molding operation due to use of a solvent which does not taken part in the metathesis polymerization reaction (e.g., toluene). The offensive odor is different from that of the solvent itself which does not take part in the metathesis polymerization (e.g., toluene). The reason for this is not clear. However, it is considered that the presence of such a solvent promotes volatilization of the offensive odor from within the crosslinked polymer composition. The present invention has been achieved based on the above findings.

More specifically, according to a first aspect of the present invention there is provided a method for preparing a metathesis polymerization catalyst solution which is one part of a metathesis polymerization catalyst system comprising two or more parts for use in a method of obtaining a crosslinked polymer composition, wherein said crosslinked polymer composition is formed by:

(1) mixing a monomer solution A (solution A) comprising a metathesis polymerrizable cyclic olefin and a catalyst component of said metathesis polymerization catalyst system, and a monomer solution B (solution B) comprising a metathesis polymerizable cyclic olefin and an alkylaluminum compound as an activator component of said metathesis polymerization catalyst system; and
(2) polymerizing and crosslinking said mixture in a mold;

characterised by preparing the metathesis polymerization catalyst solution by mixing an ether compound, a phenol compound, a metathesis polymerizable cyclic olefin alone as a solvent and at least one of $WOCl_4$ and $MoOCl_3$, wherein the metathesis polymerizable cyclic olefin alone as the solvent and at least one of $WOCl_4$ and $MoOCl_3$ are admixed in the presence of the ether compound. Preferably the ether compound of the metathesis polymerization catalyst solution is a chain ether compound.

According to a second aspect of the present invention there is provided a method for preparing a metathesis polymerization catalyst solution which is one part of a metathesis polymerization catalyst system comprising two or more parts for use in a method of obtaining a crosslinked polymer composition, wherein said crosslinked polymer composition is formed by:

(1) mixing a monomer solution A (solution A) comprising a metathesis polymerizable cyclic olefin and a catalyst component of said metathesis polymerization catalyst system, and a monomer solution B (solution B) comprising a metathesis polymerizable cyclic olefin and an alkylaluminum compound as an activator component of said metathesis polymerization catalyst system; and
(2) polymerizing and crosslinking said mixture in a mold;

characterized by the metathesis polymerization catalyst solution comprising a metathesis polymerizable cyclic olefin alone as the solvent and at least one compound represented by the general formulae

$$WOCl_{(4-x)}(OPh)_x L_s \text{ and } MoOCl_{(3-x)}(OPh)_x L_s$$

where x is greater than 0 and less than or equal to 3.0, OPh represents a phenoxy group which is unsubstituted or substituted by at least one substituent selected from the group consisting of chain saturated hydrocarbons, chain unsaturated hydrocarbons, alicyclic saturated hydrocarbons and alicyclic unsaturated hydrocarbons, L represents a chain ether, and s is a real number from 1 to 3, and admixing the metathesis polymerizable cyclic olefin alone as the solvent with the at least one compound represented by the said formulae in the presence of the chain ether.

In each aspect of the invention the metathesis polymerizable cyclic olefin contained in the metathesis polymerization catalyst solution as the solvent is preferably one or more selected from the group consisting of dicylopentadiene, ethylidene norbornene and tricyclopentadiene.

According to a third aspect of the present invention, there is provided a method for preparing a system comprising two or more parts for use in a method of obtaining a crosslinked polymer composition, comprising preparing a first part comprising a monomer solution A (solution A) according to said first or second aspect of the present invention, said second part comprising a monomer solution B (solution B) comprising a metathesis polymerizable cyclic olefin and an alkylaluminum activator compound, wherein said crosslinked polymer composition is formed by (1) mixing solutions A and B, and (2) polymerizing and crosslinking the mixture of solutions A and B in a mold. The ether compound of the metathesis polymerization catalyst solution is preferably a chain ether compound. Preferably the alkylaluminum activator compound is added in the form of a solution to the metathesis polymerizable cyclic olefin.

According to a fourth aspect of the present invention there is provided a method for preparing a system comprising two more parts for use in a method of obtaining a crosslinked polymer composition, the system comprising preparing a first part comprising a metathesis polymerization catalyst solution prepared according to said first or second aspect of the present invention, said second part comprising a metathesis polymerization catalyst activator solution containing a metathesis polymerizable cyclic olefin and an alkylaluminum activator compound, wherein said crosslinked polymer composition is formed by:

(1) mixing a monomer solution A (solution A) comprising a metathesis polymerizable cyclic olefin and the catalyst solution, and a monomer solution B (solution B) comprising a metathesis polymerizable cyclic olefin and the activator solution; and
(2) polymerizing and crosslinking said mixture in a mold.

Said metathesis polymerization catalyst activator solution preferably further comprises a chain ether compound. The ether compound of said metathesis polymerization catalyst solution is preferably a chain ether compound. Preferably the said two or more parts do not contain a solvent other than a metathesis polymerizable cyclic olefin. Suitably the alkylaluminum activator compound is in the form of a solution.

Preferably the system prepared by the fourth aspect of the invention comprises a metathesis polymerization catalyst solution containing at least one compound represented by the general formulae.

$$WOCl_{(4-x)}(OPh)_x L_s \text{ and } MoOCl_{(3-x)}(OPh)_x L_s$$

where x is greater than 0 and less than or equal to 3.0, OPh represents a phenoxy group which is unsubstituted or substituted by at least one substituent selected from the group consisting of chain saturated hydrocarbons, chain unsaturated hydrocarbons, alicyclic saturated hydrocarbons and alicyclic unsaturated hydrocarbons, L represents a chain ether and s is a real number from 1 to 3.

The present method of obtaining a crosslinked polymer composition thus comprises mixing monomer solution A and monomer solution B, solution A and solution B being defined as above, and polymerizing and crosslinking the mixture of solutions A and B in a mold. The present method can be employed to obtain a bulk-polymerised crosslinked polymer composition.

DETAILED DESCRIPTION OF THE INVENTION

The expression "the ether compound is made to act on $WOCl_4$ and/or $MoOCl_3$" in the metathesis polymerization catalyst solution of the present invention means preparing a metathesis polymerization catalyst solution by adding $WOCl_4$ and/or $MoOCl_3$ to a mixture of an ether compound and a metathesis polymerizable cyclic olefin, or by adding a metathesis polymerizable cyclic olefin after adding $WOCl_4$ and/or $MoOCl_3$ to the ether compound. The phenol compound improves catalyst activity and also modulates the reaction velocity. Making the phenol compound act on $WOCl_4$ and/or $MoOCl_3$ means to add the phenol compound in any of the phases of preparing the metathesis polymerization catalyst solution of the present invention. For example, the phenol compound can be added to the mixture containing the $WOCl_4$ and/or $MoOCl_3$ and ether compound; however, other methods may also be used. This action is considered to cause the ether compound to coordinate with the $WOCl_4$ and/or $MoOCl_3$, or with the tungsten compound and/or molybdenum compound formed from reaction of the phenol compound and the $WOCl_4$ and/or $MoOCl_3$.

As used herein, the expression "the monomer solution A (solution A)" means a solution of a metathesis polymerizable cyclic olefin and a catalyst component of the metathesis polymerization catalyst system which can be formed, for example, by adding a catalyst component of the metathesis polymerization catalyst system to a metathesis polymerizable cyclic olefin, or by adding a metathesis catalyst solution containing a catalyst component to a metathesis polymerizable cyclic olefin.

As used herein, the expression "the monomer solution B (solution B)" means a solution of a metathesis polymerizable cyclic olefin and an activator component of the metathesis polymerization system which can be formed, for example, by adding an activator component of the metathesis polymerization catalyst system to a metathesis polymerizable cyclic olefin, or by adding a metathesis polymerization catalyst activator solution containing an activator component to a metathesis polymerizable cyclic olefin.

Cationic polymerization due to a reaction between the metathesis polymerizable cyclic olefin monomer and the transition metal can be reduced by making the ether compound act on $WOCl_4$ and/or $MoOCl_3$. This provides a novel metathesis polymerization catalyst solution for preparing a crosslinked polymer, as well as an olefin metathesis crosslinked polymer composition featuring superior heat resistance as compared to those in the conventional art. Furthermore, because a metathesis polymerizable cyclic olefin can be used in the presence of the ether compound as a solvent in preparing a metathesis polymerization catalyst solution to eliminate the need for using other solvents which do not take part in the metathesis polymerization, the olefin metathesis crosslinked polymer composition as a final product does not virtually contain any inert (unreacted) solvents. This eliminates adverse effects on mechanical and physical properties including heat resistance, tensile and flexural strength when compared to a conventional crosslinked polymer containing unreacted solvents. Thus, the present invention can provide a polymer having superb mechanical and physical properties.

The metathesis polymerizable cyclic olefin monomer used as a solvent in the metathesis polymerization catalyst solution according to the present invention is metathesis-polymerizable. Even if one of the metathesis polymerizable cyclic olefin monomers is a solid at normal temperatures, it can be used as a solvent if it is mixed with other metathesis polymerizable cyclic olefin monomers or is made liquid by addition of an ether compound.

Illustrative examples of the metathesis polymerizable cyclic olefin used as a solvent for the metathesis polymerization catalyst solution are dicyclopentadiene, tricyclopentadiene, cyclopentadiene-methylcyclopentadiene codimer, 5-ethylidene norbornene, vinyl norbornene, norbornene, norbornadiene, 5-cyclohexenyl norbornene, 1,4,5,8-dimethano-1,4,4a,5,6,7,8,8a-octahydronaphthalene, 1,4-methano-1,4,4a,5,6,7,8,8a-octahydronaphthalene, 6-ethylidene-1,4,5,8-dimethano-1,4,4a,5,6,7,8,8a-octahydronaphthalene and ethylene-bis (5-norbornene). Combinations thereof can also be used. Especially, dicyclopentadiene, a mixture containing at least 50 mol% dicyclopentadiene, and a mixture containing at least 70 mol% dicyclopentadiene are preferred. Furthermore, a metathesis polymerizable cyclic olefin comprising at least one of dicyclopentadiene, ethylidene norbornene and tricyclopentadiene is preferred.

The ether compound to prepare the metathesis polymerization catalyst solution in the present invention includes cyclic ethers and chain ethers. The cyclic ether includes tetrahydrofuran, tetrahydropyran and dioxane. The chain ether comprises ethers having an aryl or aralkyl group such as anisole, phenetole, phenyl ether, benzyl ether, phenylbenzyl ether, decabromo diphenyl ether and decachloro diphenyl ether, as well as ethers having a vinyl group or an allyl group such as vinyl ether, allyl ether, methylvinyl ether, methylallyl ether, ethylvinyl ether and ethylallyl ether. In addition, the chain ether includes ethers represented by the general structural formula (1) below, where $R_1$ is an alkylene chain having from 2 to 6 carbon atoms, and $R_2$ and $R_3$ each represents an alkyl group having from 1 to 8 carbon atoms. The hydrogen atoms of $R_1$, $R_2$ and $R_3$ may be substituted by one or more halogen atoms. $R_2$ and $R_3$ may be the same or different. n is an integer of from 0 through 40, denoting the number of repeating units.

$$R_2O \longrightarrow (R_1O)_n R_3 \qquad\qquad (1)$$

When n is 0, the compound represented by the general formula (1) is a monoether having one ether linkage within a molecule thereof, such as diisopropyl ether, dibutyl ether, amyl ether, isoamyl ether, methylethyl ether, methylpropyl ether, methylbutyl ether, methylisobutyl ether, methylamyl ether, methylisoamyl ether, ethylpropyl ether, ethylbutyl ether, ethylisobutyl ether, ethylamyl ether and ethylisoamyl ether.

When n is 1 to 40, the compound is a polyether having multiple ether linkages within a molecule thereof. Illustrative examples of the polyether include the dialkyl ether of alkylene glycol and/or polyalkylene glycol.

Illustrative examples of the alkylene glycol include ethylene glycol, propylene glycol, 1,4-butandiol, 1,3-butandiol, 1,5-pentandiol, 1,6-hexandiol, 2,5-hexandiol and 2-chloro-1,3-propanediol. Those having from 2 to 6 carbon atoms are preferred. Specific examples of the polyalkylene glycol include diethylene glycol, triethylene glycol, tetraethylene glycol, dipropylene glycol, tripropylene glycol, tetrapropylene glycol, dibutylene glycol, tributylene glycol and similar glycols having a low degree of polymerization. Also included are polyethylene glycol and polypropylene glycol having a molecular weight of up to about 2,000 with about 4 to 40 repeating units where both terminals are alkylated. The alkyl group forming the terminus of the dialkyl ether compound preferably has from 1 to 8 carbon atoms. Representative dialkyl ether compounds of the alkylene glycol and/or the polyalkylene glycol compound include ethylene glycol dimethyl ether, diethylene glycol dimethyl ether, triethylene glycol dimethyl ether, ethylene glycol diethyl ether, diethylene glycol diethyl ether, triethylene glycol diethyl ether, polyethylene glycol diethyl ether and polyethylene glycol dioctyl ether. Mixtures of these ether compounds can also be used.

In the present invention, the ether compound to prepare the metathesis polymerization catalyst solution can be used in an amount of from 1 to 3 mols per mol of the $WOCl_4$ and/or $MoOCl_3$. The amount of the metathesis polymerizable cyclic olefin used as a solvent is not particularly limited so long as the $WOCl_4$ and/or $MoOCl_3$ can be uniformly dissolved or dispersed. Generally, the metathesis polymerizable cyclic olefin as a solvent is used in an amount so that the concentration of the $WOCl_4$ and/or $MoOCl_3$ is in the range of from 0.1 to 5.0 mols/liter.

Illustrative examples of the phenol compound that is used to enhance the activity of the catalyst according to the present invention and to modulate the reaction velocity include alkylphenol and 2,6-dihalo-4-alkylphenol (where the alkyl group has from 1 to 18 carbon atoms). More specific examples of the phenol compound include t-butylphenol, 2,6-dimethylphenol, 2,6-dimethylphenol, 2,6-diisopropyl phenol, 2,6-di-t-butylcresol, t-octylphenol, nonylphenol, 2,6-dichlorophenol, 2,6-dichlorocresol, 2,6-dichlorononylphenol, 2,6-dichloro-t-octylphenol, 2,6-dibromo-t-octylphenol, 2,6-bromocresol, 2,6-dibromononylphenol and 2,6-bromo-t-octylphenol. The reaction velocity can be reduced by using a phenol compound having a bulky substituent at the 2 and/or 6 position of the phenol compound. Furthermore, a mixture of two or more types of phenol compounds can be used. The phenol compound generates hydrogen chloride when it is made to act in the mixture containing the $WOCl_4$ and/or $MoOCl_3$ and the ether compound, for example, in preparing the metathesis polymerization catalyst solution of the present invention. This suggests that the phenol compound reacts with tungsten or molybdenum to form a phenoxy group.

The substance formed when the ether compound acts on the $WOCl_4$ and/or $MoOCl_3$ has improved solubility with respect to the metathesis polymerizable cyclic olefin monomer such that additional phenol compound is not needed to make the catalyst soluble. Therefore, from the viewpoint of the reactivity of the catalyst, the phenol compound can be used in an amount of from more than 0 but less than or equal to 3 mols per mol of $WOCl_4$ and/or $MoOCl_3$.

Monomer solution B (solution B) contains an organic aluminum compound as an activator component of the metathesis polymerization catalyst system. An alkylaluminum compound, an alkylaluminum halide compound and an alkoxyaluminum compound are preferred. More specifically, useful examples of the organic aluminum compound include diethylaluminum chloride, ethylaluminum dichloride, triisobutylaluminum, trioctylaluminum, dioctylaluminum iodide, ethoxydiethyl aluminum, diethoxyethyl aluminum and ethoxyethyl aluminum chloride. A mixture of two or more types of these organic aluminum compounds can be used.

The crosslinked polymer composition can be formed by mixing the above described solutions A and B and injecting them into a mold. However, when using the above-described solutions, polymerization may start at a very early phase and hardening occurs before sufficient amounts of the solutions are injected into the mold. In this case, a reaction velocity modifier can be added to the solution B containing an organic alkylaluminum compound.

Preferably used as a reaction velocity moderator is an ether compound, especially a chain ether compound represented by the following general structural formula (1) below, where $R_1$ is an alkylene chain having from 2 to 6 carbon atoms, and $R_2$ and $R_3$ represent an alkyl group having from 1 to 8 carbon atoms. $R_2$ and $R_3$ may be the same or different. n is an integer from 0 to 40, denoting the number of repeating units.

$$R_2O \text{---} (R_1O)_n \text{---} R_3 \qquad\qquad (1)$$

When n is 0, the compound represented by the general formula (1) is a monoether having one ether linkage within the molecule, such as diisopropyl ether, dibutyl ether, amyl ether, isoamyl ether, methylethyl ether, methylpropyl ether, methylbutyl ether, methylisobutyl ether, methylamyl ether, methylisoamyl ether, ethylpropyl ether, ethylbutyl ether, ethylisobutyl ether, ethylamyl ether and ethylisoamyl ether.

When n is 1 to 40, the compound is a polyether having multiple ether linkages within the molecule. Illustrative examples of the polyether include the dialkyl ether of alkylene glycol and/or polyalkylene glycol.

Illustrative examples of the alkylene glycol include ethylene glycol, propylene glycol, 1,4-butandiol, 1,3-butandiol, 1,5-pentandiol, 1,6-hexandiol and 2,5-hexandiol. Those having from 2 to 6 carbon atoms are preferred. Specific examples of the polyalkylene glycol include diethylene glycol, triethylene glycol, tetraethylene glycol, dipropylene glycol, tripropylene glycol, tetrapropylene glycol, dibutylene glycol, tributylene glycol and similar glycols having a low degree of polymerization. Also included are polyethylene glycol and polypropylene glycol having a molecular weight of up to about 2,000 with about 4 to 40 repeating units where both terminals are alkylated. The alkyl group forming the terminus of the dialkyl ether compound preferably has from 1 to 8 carbon atoms. Representative dialkyl ether compounds of the alkylene glycol and/or polyalkylene glycol compound include ethylene glycol dimethyl ether, diethylene glycol dimethyl ether, triethylene glycol dimethyl ether, ethylene glycol diethyl ether, diethylene glycol diethyl ether, triethylene glycol diethyl ether, polyethylene glycol diethyl ether and polyethylene glycol dioctyl ether. Mixtures of these ether compounds can also be used.

The relative amounts of the metathesis polymerization catalyst solution and activator component for use in the present invention are described as follows. When $WOCl_4$ is used as a catalyst component, for example, the molar ratio of the metathesis polymerizable monomer contained in monomer solutions A and B to the $WOCl_4$ is suitably from 1,000 : 1 to 40,000 : 1, and more preferably from 1,500 : 1 to 20,000 : 1. For the activator component, the molar ratio of the metathesis polymerizable monomer contained in monomer solutions A and B to the aluminum compound is preferably from 100 : 1 to 20,000 : 1, and more preferably from 200 : 1 to 10,000 : 1.

The metathesis polymerizable monomer solutions A and/or B can include an olefin monomer, other polymers and various additives added for specific purposes.

Illustrative examples of the metathesis polymerizable cyclic olefin used as a raw material for the metathesis polymerization include dicyclopentadiene, tricyclopentadiene, cyclopentadiene-methylcyclopentadiene codimer, 5-ethylidene norbornene, vinyl norbornene, norbornene, norbornadiene, 5-cyclohexenyl norbornene, 1,4,5,8-dimethano-1,4,4a,5,6,7,8,8a-octahydronaphthalene, 1,4-methano-1,4,4a,5,6,7,8,8a-octahydronaphthalene, 6-ethylidene-1,4,5,8-dimethano-1,4,4a,5,6,7,8,8a-octahydronaphthalene and ethylene-bis (5-norbornene). Combinations thereof can also be used. Especially, dicyclopentadiene, a mixture containing at least 50 mol% dicyclopentadiene, and a mixture containing at least 70 mol% dicyclopentadiene are preferred.

The composition of the above-described metathesis polymerizable cyclic olefin monomer used as a raw material for the metathesis polymerization can be the same as or different from the metathesis polymerizable cyclic olefin monomer used as a solvent for preparing the metathesis polymerization catalyst solution.

As a metathesis polymerizable cyclic olefin monomer serving as a raw material for the metathesis polymerization, a metathesis polymerizable cyclic olefin having a polar group containing different types of elements such as oxygen, nitrogen and halogen elements can be used in the capacity of a co-monomer as needed. A cyclic olefin having a norbornene structural unit is preferred as a co-monomer, and an ester group, an ether group, a cyano group, an N-substituted imide group and a halogen group are preferred polar groups. Illustrative examples of the copolymer monomers include 5-methoxycarbonylnorbornene, 5-(2-ethylhexoxy)carbonyl-5-methylnorbornene, 5-phenoxymethylnorbornene, 5-cyanonorbornene, 6-cyano-1,4,5,8-dimethano-1,4,4a,5,6,7,8,8a-octahydronaphthalene, N-butylnadic imide and 5-chlornorbornene. When a monomer having a group which forms a Lewis base is used as a raw material for the metathesis polymerization, the monomer can also function as a modulator.

Furthermore, an antioxidant is preferably added to the crosslinked polymer composition of the present invention. Thus, a phenol or amine based antioxidant is preferably added to the solutions A and/or B in advance. Illustrative examples of the antioxidant are 2,6-di-t-butylcresol, N, N'-diphenyl-p-phenylenediamine and tetrakis[methylene (3,5-di-t-butyl-4-hydroxycinnamate)]methane.

Also, other polymers can be added to the crosslinked polymer composition of the present invention while in the state of a monomer solution. For example, an elastomer can be added to enhance the impact strength of the crosslinked polymer composition and to control the viscosity of the solutions A and/or B. An extensive range of elastomers can be used for this purpose such as styrene-butadiene-styrene block rubbers, styrene-isoprene-styrene block rubbers, polybutadiene, polyisoprene, butyl rubber, ethylene-propylene-diene terpolymer and nitrile rubber.

Other additives include halogenated hydrocarbon and halogen compounds to enhance the reaction rate such as hexachloroxylene, $\alpha$, $\alpha,\alpha$-trichlorotoluene, carbon tetrachloride, 1,1,1-trichloroethane, allyl-chloride and benzylchloride. Furthermore, halogen compounds including silicon, boron, sulfur and phosphorous are effective in enhancing reaction efficiency.

The use of a reinforcement or filler as an additive is effective in improving the flexural modulus. These materials include glass fiber, mica, carbon black and wollastonite. The reinforcement or filler is often subjected to surface treatment with a so-called silane coupler.

As discussed above, the crosslinked polymer composition is formed by simultaneous polymerization and molding. The molding method may comprise (1) a resin injection method where a premix comprising a catalyst and a monomer solution mixed in advance is poured into a mold; and (2) a RIM (reaction injection molding) method where the catalyst system is divided into two solutions A and B which collide and are mixed with each other in a mixing head, and then injected into the mold. In any case, the mold injection pressure can be kept comparatively low, and this allows use of a less expensive mold. Furthermore, when polymerization begins in the mold, the temperature within the mold is increased by the exotherm, and the polymerization is complete in a short period of time. Unlike the case of polyurethane RIM, demolding is easy, and is usually carried out without any releasing agent.

Because an oxidated layer is formed on the surface, the crosslinked polymer composition provides excellent adhesion to generally used paints such as epoxy and urethane paints.

The present invention is described in greater detail by reference to the following Examples. However, the present invention should not be construed as being limited thereto. In the following Examples, the metathesis polymerization catalyst solution is called a "catalyst solution".

EXAMPLES

Catalyst Solution Preparation

### Example 1

150 g of dicyclopentadiene (hereinafter referred to as "DCPD") and 45.0 g (0.5 moles) of ethylene glycol dimethyl ether were placed into a one-liter flask and homogenized to prepare a solvent for a catalyst solution. Oxygen in this solution and oxygen in the flask were replaced with nitrogen by blowing nitrogen into the solution for preparing a catalyst solution. 85.5 g (0.25 moles) of $WOCl_4$ crystal was gradually added to this system, and was uniformly dissolved into a mixture solution of DCPD and ethylene glycol dimethyl ether by stirring and mixing. When the $WOCl_4$ was added, the solution temperature and viscosity did not rise. Then, a solution was prepared by dissolving 55.0 g (0.25 moles) of nonylphenol into 55.0 g of DCPD to thereby reduce the viscosity of the nonylphenol. The resulting solution was added dropwise from the upper portion of the flask. After the addition, the contents were agitated at room temperature for 17 hours. DCPD was added so that the tungsten concentration was 0.5 mol per liter in the final phase to provide a catalyst solution for polymerization. All operations in Example 1 were conducted under a nitrogen atmosphere. Afterwards, this catalyst solution was found to be stable without the occurrence of cationic polymerization after being held at room temperature and under a nitrogen atmosphere for not less than one month.

### Example 2

A catalyst solution was prepared in the same manner as Example 1, except that $WOCl_4$ was replaced by $MoOCl_3$, and the ethylene glycol dimethyl ether was replaced by diethylene glycol dimethyl ether. Afterwards, this catalyst solution was found to be stable without the occurrence of cationic polymerization after being held at room temperature under a nitrogen atmosphere for not less than one month.

### Example 3

A catalyst solution was prepared in the same manner as Example 1, except that a mixture solution of a metathesis polymerizable cyclic olefin comprising DCPD and ethylidene norbornene mixed at a molar ratio of 90 to 10 and dibutyl ether was used instead of the mixture of DCPD and ethylene glycol dimethyl ether. Afterwards, this catalyst solution was found to be stable without the occurrence of cationic polymerization after being held at room temperature under a nitrogen atmosphere for not less than one month.

### Example 4

150 g of a metathesis polymerizable cyclic olefin comprising DCPD and tricyclopentadiene mixed at a molar ratio of 90 to 10 and 45.0 g (0.5 moles) of ethylene glycol dimethyl ether were placed into a one-liter flask, and homogenized to prepare a solvent for a catalyst solution. Oxygen in this solution and oxygen in the flask were replaced with nitrogen by blowing nitrogen into the solution for preparing a catalyst solution. 85.5 g (0.25 moles) of $WOCl_4$ crystal was gradually added to this system and uniformly dissolved into a mixture solution of DCPD, tricyclopentadiene and ethylene glycol dimethyl ether by stirring and mixing. When the $WOCl_4$ was added, the solution temperature and viscosity did not rise. Then, a solution was prepared by dissolving 51.5 g (0.25 moles) of t-octylphenol into 22.5 g (0.25 mol) of ethylene glycol dimethyl ether. The resulting solution was added dropwise from the upper portion of the flask. After the addition, the contents were agitated at room temperature for 17 hours. DCPD was then added so that the tungsten concentration was 0.5 mol per liter in the final phase to obtain a catalyst solution for polymerization. All of these operations were conducted under a nitrogen atmosphere.

Afterwards, this catalyst solution was found to be stable without the occurrence of cationic polymerization after being held at room temperature under a nitrogen atmosphere for not less than one month.

### Example 5

A catalyst solution was prepared in the same manner as Example 1, except that the phenol compound was replaced by 2,6-dimethyl phenol. Afterwards, this catalyst solution was found to be stable without the occurrence of cationic polymerization after being held at room temperature under a nitrogen atmosphere for not less than one month.

### Example 6

A catalyst solution was prepared in the same manner as Example 1, except that the ether compound was replaced by diethylene glycol dimethyl ether, and the phenol compound was replaced by 2,6-diisopropyl phenol. Afterwards, this catalyst solution was found to be stable without the occurrence of cationic polymerization after being held at room temperature under a nitrogen atmosphere for not less than one month.

Example 7

A catalyst solution was prepared in the same manner as Example 1, except that the ether compound was replaced by triethylene glycol dimethyl ether, and the phenol compound was replaced by 2,6-dibromononyl phenol. Afterwards, this catalyst solution was found to be stable without the occurrence of cationic polymerization after being held at room temperature under a nitrogen atmosphere for not less than one month.

Example 8

A catalyst solution was prepared in the same manner as Example 1, except that the ether compound was replaced by diethylene glycol dimethyl ether, and the added amount of the nonylphenol compound was doubled. Afterwards, this catalyst solution was found to be stable without the occurrence of cationic polymerization after being held at room temperature under a nitrogen atmosphere for not less than one month.

Example 9

A catalyst solution was prepared in the same manner as Example 1, except that the ether compound was replaced by tetrahydrofuran as a cyclic ether. Afterwards, this catalyst solution was found to be stable without the occurrence of cationic polymerization after being held at room temperature under a nitrogen atmosphere for not less than one month.

Comparative Example 1

A metathesis polymerizable cyclic olefin comprising DCPD and ethylidene norbornene mixed at a molar ratio of 90 to 10 was placed into a one-liter flask and used as a solvent. Oxygen in this solution and oxygen in the flask were replaced with nitrogen by blowing nitrogen into the solution for preparing a catalyst solution. An attempt was made to gradually add 85.5 g (0.25 moles) of $WOCl_4$ crystal to this system. During the course of the addition, the temperature in the solution began to rise, so the crystal addition was not completed. Afterwards, the temperature continued to rise, and the substance inside the flask eventually solidified. Thus, it was not possible to prepare a catalyst solution.

Comparative Example 2

A catalyst solution was prepared in the same manner as Example 1, except that toluene was used in place of a metathesis polymerizable cyclic olefin as a solvent. Afterwards, this catalyst solution was found to be stable without the occurrence of cationic polymerization after being held at room temperature under a nitrogen atmosphere for not less than one month.

Table 1 summarizes the composition of the catalysts prepared in the above-mentioned Examples and Comparative Examples.

Table 1

| Components of the Catalyst System. | | | | | |
| --- | --- | --- | --- | --- | --- |
| | Transition metal compound (M) | Ether compound (E1) | Phenol compound (P) | Addition Ratio of M:E1:P (mole ratio) | Solvent (mol%) |
| Example 1 | $WOCl_4$ | ethylene glycol dimethyl ether | nonylphenol | 1:2:1 | dicyclopentadiene (100) |
| Example 2 | $MoOCl_3$ | diethylene glycol dimethyl ether | nonylphenol | 1:2:1 | dicyclopentadiene (100) |
| Example 3 | $WOCl_4$ | dibutyl ether | nonylphenol | 1:2:1 | dicyclopentadiene (90) ethylidene norbornene (10) |

Table 1   (continued)

| Components of the Catalyst System. | | | | | |
|---|---|---|---|---|---|
| | Transition metal compound (M) | Ether compound (E1) | Phenolcompound (P) | Addition Ratio of M:E1:P (mole ratio) | Solvent (mol%) |
| Example 4 | $WOCl_4$ | ethylene glycol dimethyl ether | t-octylphenol | 1:3:1 | dicyclopentadiene (90) tricyclopentadiene (10) |
| Example 5 | $WOCl_4$ | ethylene glycol dimethyl ether | 2,6-dimethyl phenol | 1:2:1 | dicyclopentadiene (100) |
| Example 6 | $WOCl_4$ | diethylene glycol dimethyl ether | 2,6-diisopropyl phenol | 1:2:1 | dicyclopentadiene dicyclopentadiene (100) |
| Example 7 | $WOCl_4$ | triethylene glycol dimethyl ether | 2,6-dibromononyl phenol | 1:2:1 | dicyclopentadiene (100) |
| Example 8 | $WOCl_4$ | diethylene glycol dimethyl ether | nonyl phenol | 1:2:2 | dicyclopentadiene (100) |
| Example 9 | $WOCl_4$ | tetrahydrofuran | nonyl phenol | 1:2:1 | dicyclopentadiene (100) |
| Comparative Example 1 | $WOCl_4$ | none | none | 1:0:0 | dicyclopentadiene (90) ethylidene norbornene (10) |
| Comparative Example 2 | $WOCl_4$ | ethylene glycol dimethyl ether | nonyl phenol | 1:2:1 | toluene (100) |

Example 10

(Preparation of Solution A)

Solution A was prepared by adding the catalyst solution of Example 1 to a solution formed by adding 3 parts by weight of ethylene-polypropylene-ethylidenenorbornene polymerized rubber having an ethylene content of 70 mol% and 2 parts by weight of Ethanox 702 made by Ethyl Corp. as an antioxidant, to a monomer mixture serving as a metathesis polymerization material comprising 97 parts by weight DCPD and 3 parts by weight ethylidenenorbornene, so that the tungsten content was 0.01 mol per liter. The viscosity of this solution was 300 cps at 30 °C. All of these operations were performed under a nitrogen atmosphere. Afterwards, solution A was found to be stable without the occurrence of cationic polymerization after being held at room temperature under a nitrogen atmosphere for not less than one month.

(Preparation of Solution B)

Solution B was prepared by mixing a metathesis polymerization catalyst activator solution comprising triisobutylaluminum and diethylene glycol dimethyl ether mixed at a molar ratio of 100 to 50 with a monomer mixture formed by adding 3 parts by weight ethylene-polypropylene-ethylidenenorbornene polymerized rubber having an ethylene content of 70 mol% to a monomer mixture serving as a metathesis polymerization material comprising 97 parts by weight DCPD and 3 parts by weight ethylidenenorbornene, so that the aluminum content was 0.015 mol per liter. All of these operations were performed under a nitrogen atmosphere. The viscosity of this solution B was 300 cps at 30 °C.

(Evaluation of Reactivity)

10 ml of each of solutions A and B of this Example controlled at 30 °C was measured out with a syringe, and the solutions A and B were injected into a 100 ml nitrogen-substituted glass vessel provided with an agitator to start polymerization. The time for the temperature to reach 100 °C from 30 °C due to heat generated by the polymerization was 42 seconds, and a maximum temperature of 194 °C was reached.

(Molding and Physical Properties)

A small-sized desktop RIM device was used which was designed so that both solutions A and B are jetted out of respective nozzles to collide and mix in a mixing head, and the resulting mixture is injected into a mold. Solutions A and B of this Example were injected into a mold for providing flat-formed plaques with the upper-side (core-side) mold surface at 60 °C and the bottom-side (cavity-side) mold surface at 90 °C, to thereby produce a molded plate (200 × 200 × 3 mm). The amount of fumes released when the mold was opened was very small because an unreacted solvent was not present in the reaction system. There was little offensive odor at the molding site or from the molded plaque itself. Heat resistance (HDT-heat distortion temperature) was measured according to JIS K7207, and impact strength (NI-notched Izod) was measured according to JIS K7110. The results are shown in Table 2.

Example 11

Preparation of Solutions A and B, Evaluation of Reactivity and Molding and Physical Properties were carried out in the same manner as Example 10, except that the catalyst solution prepared in Example 2 was used. The results are shown in Table 2. The amount of fumes released when the mold was opened was very small because an unreacted solvent was not present in the reaction system. There was little offensive odor at the molding site or from of the molded plaque itself. Afterwards, solution A was found to be stable without the occurrence of cationic polymerization after being held at room temperature under a nitrogen atmosphere for not less than one month.

Example 12

Preparation of Solutions A and B, Evaluation of Reactivity and Molding and Physical Properties were carried out in the same manner as Example 10, except that the catalyst solution prepared in Example 3 was used. The results are shown in Table 2. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 13

Preparation of Solutions A and B, Evaluation of Reactivity and Molding and Physical Properties were carried out in the same manner as Example 10, except that the catalyst solution prepared in Example 4 was used, and a mixture comprising dicyclopentadiene and tricyclopentadiene mixed at a molar ratio of 90 to 10 was used as a monomer mixture of the metathesis polymerization material. The results are shown in Table 2. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 14

Preparation of Solutions A and B, Evaluation of Reactivity and Molding and Physical Properties were carried out in the same manner as Example 10, except that the catalyst solution prepared in Example 5 was used. The results are shown in Table 2. It is clearly seen that the bulky substituents introduced at positions 2 and 6 of the phenol compound (2,6-dimethyl phenol) were effective in controlling the reaction velocity. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 15

Preparation of Solutions A and B, Evaluation of Reactivity and Molding and Physical Properties were carried out in the same manner as Example 10, except that the catalyst solution prepared in Example 6 was used. The results are shown in Table 2. It is clearly seen that the bulky substituents introduced at positions 2 and 6 of the phenol compound (2,6-diisopropyl phenol) were effective in controlling the reaction velocity. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 16

Preparation of Solutions A and B, Evaluation of Reactivity and Molding and Physical Properties were carried out in the same manner as Example 10, except that the catalyst solution prepared in Example 7 was used. The results are shown in Table 2. It is dearly seen that the bulky substituents introduced at positions 2 and 6 of the phenol compound (2,6-dibromononyl phenol) were effective in controlling the reaction velocity. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 17

Preparation of Solutions A and B, Evaluation of Reactivity and Molding and Physical Properties were carried out in the same manner as Example 10, except that the catalyst solution prepared in Example 8 was used. The results are shown in Table 2. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Example 18

Preparation of Solutions A and B, Evaluation of Reactivity and Molding and Physical Properties were carried out in the same manner as Example 10, except that the catalyst solution prepared in Example 9 was used. The results are shown in Table 2. The amount of fumes released when the mold was opened was very small because an unreacted solvent was not present in the reaction system. There was little offensive odor at the molding site or from the molded plaque itself. Afterwards, solution A was found to be stable without the occurrence of cationic polymerization after being held at room temperature under a nitrogen atmosphere for not less than one month.

Comparative Example 3

Preparation of Solutions A and B, Evaluation of Reactivity and Molding and Physical Properties were carried out in the same manner as Example 10, except that the catalyst solution prepared in Comparative Example 2 was used. The results are shown in Table 2. Although the same catalyst system was used, heat resistance was 110 °C which was not sufficient. This is because the molded plaque contained toluene as an unreacted solvent. When the mold was opened, a large amount of fumes was released because an unreacted solvent was present in the reaction system. There was a noticeably strong offensive odor at the molding site and also from the molded plaque itself.

Table 2

| | Catalyst source | Composition of activator solution | | | | Properties | | | |
|---|---|---|---|---|---|---|---|---|---|
| | | Activator Component (A) | Ether Compound (E2)*1 | M:A:E2*2 | Monomer (mol%)*3 | Reaction Velocity (sec)*4 | HDT (°C) | NI (kgcm/cm) | Offensive Odor of Molded Plaque |
| Example 10 | Example 1 | triisobutyl-aluminum | diethylene glycol dimethyl ether | 1:1.5:0.75 | dicyclopentadiene (97) ethylidene norbornene (3) | 42 | 124 | 51 | almost none |
| Example 11 | Example 2 | triisobutyl-aluminum | diethylene glycol dimethyl ether | 1:1.5:0.75 | dicyclopentadiene (97) ethylidene norbornene (3) | 65 | 124 | 51 | almost none |
| Example 12 | Example 3 | triisobutyl-aluminum | diethylene glycol dimethyl ether | 1:1.5:0.75 | dicyclopentadiene (97) ethylidene norbornene (3) | 45 | 124 | 51 | almost none |
| Example 13 | Example 4 | triisobutyl-aluminum | diethylene glycol dimethyl ether | 1:1.5:0.75 | dicyclopentadiene (90) tricyclopentadiene (10) | 47 | 141 | 28 | almost none |
| Example 14 | Example 5 | triisobutyl-aluminum | diethylene glycol dimethyl ether | 1:1.5:0.75 | dicyclopentadiene (97) ethylidene norbornene (3) | 159 | 122 | 50 | almost none |
| Example 15 | Example 6 | triisobutyl-aluminum | diethylene glycol dimethyl ether | 1:1.5:0.75 | dicyclopentadiene (97) ethylidene norbornene (3) | 225 | 121 | 52 | almost none |
| Example 16 | Example 7 | triisobutyl-aluminum | diethylene glycol dimethyl ether | 1:1.5:0.75 | dicyclopentadiene (97) ethylidene norbornene (3) | 130 | 121 | 52 | almost none |
| Example 17 | Example 8 | triisobutyl-aluminum | diethylene glycol dimethyl ether | 1:1.5:0.75 | dicyclopentadiene (97) ethylidene norbornene (3) | 142 | 115 | 51 | almost none |
| Example 18 | Example 9 | triisobutyl-aluminum | diethylene glycol dimethyl ether | 1:1.5:0.75 | dicyclopentadiene (97) ethylidene norbornene (3) | 42 | 117 | 51 | almost none |
| Comparative Example 3 | Comparative Example 2 | triisobutyl-aluminum | diethylene glycol dimethyl ether | 1:1.5:0.75 | dicyclopentadiene (97) ethylidene norbornene (3) | 42 | 110 | 48 | detected |

*1: Ether added to the metathesis polymerization catalyst activator solution.
*2: M denotes the transition metal compound (M) in Table 1.
*3: Metathesis polymerizable cyclic olefin monomer serving as a metathesis polymerization material.
*4: Time for the temperature to reach 100 °C from 30 °C due to heat generated by the polymerization, when 10 ml of each of solutions A and B controlled at 30 °C was measured out using a syringe, and injected into a 100 ml nitrogen-substituted glass vessel provided with an agitator to initiate polymerization.

13

As shown in Tables 1 and 2, the present invention relates to a metathesis polymerization catalyst solution for preparing a crosslinked polymer composition. The crosslinked polymer composition is formed by mixing a monomer solution A (solution A) comprising a metathesis polymerizable cyclic olefin and a catalyst component of a metathesis polymerization catalyst system, and a monomer solution B (solution B) comprising a metathesis polymerizable cyclic olefin and an alkylaluminum compound as an activator component of the metathesis polymerization catalyst system, and by polymerizing and crosslinking the mixture in a mold into which it is injected. Cationic polymerization is prevented if an ether compound and a phenol compound are made to act on the $WOCl_4$ and/or $MoOCl_3$, and a metathesis polymerized cyclic olefin is used as a solvent in preparing said metathesis polymerization catalyst solution. Thus, this invention allows for use of a metathesis polymerizable cyclic olefin which could not hitherto have been used as a solvent due to cationic polymerization caused by the catalyst. Also, unreacted solvents can be eliminated by using only the metathesis polymerizable cyclic olefin monomer as a solvent, to thereby reduce the amount of fumes and offensive odor generated at the molding site and from a molded article. Furthermore, the present inventors found that an ether compound is advantageously added as a reaction velocity modulator to the monomer solution B to thereby improve catalytic activity and provide a substantial improvement in heat resistance without reducing impact strength. The monomer solution A (solution A) containing a metathesis polymerizable cyclic olefin compound of the present invention has excellent handling properties as a metathesis polymerization material even after storage for a long period of time, without a reduction in reaction activity or increase in viscosity.

While the invention has been described in detail and with reference to specific embodiments thereof, it will be apparent to one skilled in the art that various changes and modifications can be made therein without departing form the scope thereof.

## Claims

1. A method for preparing a metathesis polymerization catalyst solution which is one part of a metathesis polymerization catalyst system comprising two or more parts for use in a method of obtaining a crosslinked polymer composition, wherein said crosslinked polymer composition is formed by:

   (1) mixing a monomer solution A (solution A) comprising a metathesis polymerizable cyclic olefin and a catalyst component of said metathesis polymerization catalyst system, and a monomer solution B (solution B) comprising a metathesis polymerizable cyclic olefin and an alkylaluminum compound as an activator component of said metathesis polymerization catalyst system; and

   (2) polymerizing and crosslinking said mixture in a mold;

   **characterised by** preparing the metathesis polymerization catalyst solution by mixing an ether compound, a phenol compound, a metathesis polymerizable cyclic olefin alone as the solvent and at least one of $WOCl_4$ and $MoOCl_3$, wherein the metathesis polymerizable cyclic olefin alone as the solvent and the at least one of $WOCl_4$ and $MoOCl_3$ are admixed in the presence of the ether compound.

2. The method as claimed in claim 1, wherein the ether compound of the metathesis polymerization catalyst solution is a chain ether compound.

3. A method for preparing a metathesis polymerization catalyst solution which is one part of a metathesis polymerization catalyst system comprising two or more parts for use in a method of obtaining a crosslinked polymer composition, wherein said crosslinked polymer composition is formed by:

   (1) mixing a monomer solution A (solution A) comprising a metathesis polymerizable cyclic olefin and a catalyst component of said metathesis polymerization catalyst system, and a monomer solution B (solution B) comprising a metathesis polymerizable cyclic olefin and an alkylaluminum compound as an activator component of said metathesis polymerization catalyst system; and

   (2) polymerizing and crosslinking said mixture in a mold;

   **characterised by** the metathesis polymerization catalyst solution comprising a metathesis polymerizable cyclic olefin alone as the solvent and at least one compound represented by the general formulae

$$\text{WOCl}_{(4-x)}(\text{OPh})_x\text{L}_s \text{ and } \text{MoOCl}_{(3-x)}(\text{OPh})_x\text{L}_s$$

where x is greater than 0 and less than or equal to 3.0, OPh represents a phenoxy group which is unsubstituted or substituted by at least one substituent selected from the group consisting of chain saturated hydrocarbons, chain unsaturated hydrocarbons, alicyclic saturated hydrocarbons and alicyclic unsaturated hydrocarbons, L represents a chain ether, and s is a real number from 1 to 3, and admixing the metathesis polymerizable cyclic olefin alone as the solvent with the at least one compound represented by the said formulae in the presence of the chain ether.

4. A method for preparing a metathesis polymerization catalyst solution as claimed in any one of claims 1 to 3, wherein the metathesis polymerizable cyclic olefin contained in the metathesis polymerization catalyst solution as the solvent is one or more selected from the group consisting of dicyclopentadiene, ethylidene norbornene and tricyclopentadiene.

5. A method for preparing a metathesis polymerization catalyst solution as claimed in any one of claims 1 to 4 wherein solutions A and B do not contain a solvent other than a metathesis polymerizable cyclic olefin.

6. A method for preparing a system comprising two or more parts for use in a method of obtaining a crosslinked polymer composition, comprising preparing a first part comprising a monomer solution A (solution A) comprising a metathesis polymerizable cyclic olefin and a metathesis polymerization catalyst solution according to the method of any one of claims 1 to 5, said second part comprising a monomer solution B (solution B) comprising a metathesis polymerizable cyclic olefin and an alkylaluminum activator compound, wherein said crosslinked polymer composition is formed by (1) mixing solutions A and B, and (2) polymerizing and crosslinking the mixture of solutions A and B in a mold.

7. The method as claimed in claim 6, wherein the ether compound of the metathesis polymerization catalyst solution is a chain ether compound.

8. The method as claimed in claim 6, wherein the alkylaluminum activator compound is added in the form of a solution to the metathesis polymerisable cyclic olefin.

9. A method for preparing a system comprising two or more parts for use in a method of obtaining a crosslinked polymer composition, comprising preparing a first part comprising a metathesis polymerization catalyst solution according to the method of any one of claims 1 to 5, said second part comprising a metathesis polymerization catalyst activator solution containing a metathesis polymerizable cyclic olefin and an alkylaluminum activator compound, wherein said crosslinked polymer composition is formed by:

(1) mixing a monomer solution A (solution A) comprising a metathesis polymerizable cyclic olefin and the catalyst solution, and a monomer solution B (solution B) comprising a metathesis polymerizable cyclic olefin and the activator solution; and

(2) polymerizing and crosslinking said mixture in a mold.

10. The method as claimed in any one of claims 6 to 9, wherein the metathesis polymerization catalyst activator solution further comprises a chain ether compound.

11. The method as claimed in claim 10, wherein the ether compound of said metathesis polymerization catalyst solution is a chain ether compound.

12. The method as claimed in any one of claims 6 to 11, wherein the metathesis polymerization catalyst solution contains at least one compound represented by the general formulae

$$\text{WOCl}_{(4-x)}(\text{OPh})_x\text{L}_s \text{ and } \text{MoOCl}_{(3-x)}(\text{OPh})_x\text{L}_s$$

wherein x is greater than 0 and less than or equal to 3.0, OPh represents a phenoxy group which is unsubstituted or substituted by at least one substituent selected from the group consisting of chain saturated hydrocarbons, chain unsaturated hydrocarbons, alicyclic saturated hydrocarbons and alicyclic unsaturated hydrocarbons, L represents a chain ether, and s is a real number from 1 to 3.

13. A method as claimed in any one of claims 6 to 12 wherein said two or more parts do not contain a solvent other than a metathesis polymerizable cyclic olefin.

14. A method of obtaining a crosslinked polymer composition comprising mixing monomer solution A and monomer solution B, solution A and solution B being defined according to any one of claims 6 to 13, and polymerizing and crosslinking the mixture of solutions A and B in a mold.

15. A method according to claim 14 wherein the crosslinked polymer composition is a bulk-polymerised crosslinked polymer composition.

**Patentansprüche**

1. Verfahren zur Herstellung einer Metathesepolymerisation-Katalysatorlösung, die ein Teil eines Metathesepolymerisation-Katalysatorsystems ist, umfassend zwei oder mehr Teile, für den Gebrauch in einem Verfahren, um eine vernetzte Polymerzusammensetzung zu erhalten, worin die vernetzte Polymerzusammensetzung gebildet wird durch:

(1) Mischen einer Monomerlösung A (Lösung A), umfassend ein metathetisch polymerisierbares cyclisches Olefin und eine Katalysatorverbindung des Metathesepolymerisation-Katalysatorsystems, und einer Monomerlösung B (Lösung B), umfassend ein metathetisch polymerisierbares cyclisches Olefin und eine Alkylaluminiumverbindung als eine Aktivatorkomponente des Metathesepolymerisation-Katalysatorsystems; und

(2) Polymerisieren und Vernetzen des Gemisches in einer Form;

**gekennzeichnet durch** Herstellen der Metathesepolymerisation-Katalysatorlösung **durch** Mischen einer Etherverbindung, einer Phenolverbindung, eines metathetisch polymerisierbaren cyclischen Olefins alleine als das Lösungsmittel und mindestens einem von $WOCl_4$ und $MoOCl_3$, worin das metathetisch polymerisierbare cyclische Olefin allein als das Lösungsmittel und mindestens eines von $WOCl_4$ und $MoOCl_3$ in Gegenwart der Etherverbindung gemischt werden.

2. Verfahren nach Anspruch 1, worin die Etherverbindung der Metathesepolymerisation-Katalysatorlösung eine Kettenetherverbindung ist.

3. Verfahren zur Herstellung einer Metathesepolymerisation-Katalysatorlösung, die ein Teil eines Metathesepolymerisation-Katalysatorsystems ist, umfassend zwei oder mehr Teile, zum Gebrauch in einem Verfahren zum Erhalten einer vernetzten Polymerzusammensetzung, worin die vernetzte Polymerzusammensetzung gebildet wird durch:

(1) Mischen einer Monomerlösung A (Lösung A), umfassend ein metathetisch polymerisierbares cyclisches Olefin und eine Katalysatorkomponente des Metathesepolymerisation-Katalysatorsystems, und einer Monomerlösung B (Lösung B), umfassend ein metathetisch polymerisierbares cyclisches Olefin und eine Alkylaluminiumverbindung als eine Aktivatorkomponente des Metathesepolymerisation-Katalysatorsystems, und

(2) Polymerisieren und Vernetzen des Gemisches in einer Form,

**gekennzeichnet dadurch, daß** die Metathesepolymerisation-Katalysatorlösung ein metathetisch polymerisierbares cyclisches Olefin allein als das Lösungsmittel und mindestens eine Verbindung umfasst, die durch die allgemeine Formel

$$WOCl_{(4-x)}(OPh)_x L_s \text{ und } MoOCl_{(3-x)}(OPh)_x L_s$$

dargestellt wird, worin x größer als 0 und weniger als oder gleich 3,0 ist, OPh eine Phenoxygruppe darstellt, die unsubstituiert oder mit mindestens einem Substituenten substituiert ist, ausgewählt aus der Gruppe, bestehend aus gesättigten Kohlenwasserstoffketten, ungesättigten Kohlenwasserstoffketten, alicyclischen gesättigten Kohlenwasserstoffen und alicyclischen ungesättigten Kohlenwasserstoffen, L einen Kettenether darstellt und s eine reale Zahl zwischen 1 und 3 ist, und Mischen des metathetisch polymerisierbaren cyclischen Olefins alleine als das Lösungsmittel mit mindestens einer Verbindung, dargestellt durch die angeführte Formel, in Gegenwart eines Kettenethers.

4. Verfahren zur Herstellung einer Metathesepolymerisation-Katalysatorlösung nach einem der Ansprüche 1 bis 3, worin das metathetisch polymerisierbare cyclische Olefin, das in der Metathesepolymerisations-Katalysatorlösung als das Lösungsmittel enthalten ist, eines oder mehrere, ausgewählt aus der Gruppe, bestehend aus Dicyclopentadien, Ethylidennorbonen und Tricyclopentadien, ist.

5. Verfahren zur Herstellung einer Metathesepolymerisation-Katalysatorlösung nach einem der Ansprüche 1 bis 4, worin Lösungen A und B kein anderes Lösungsmittel als ein metathetisch polymerisierbares cyclisches Olefin enthalten.

6. Verfahren zur Herstellung eines Systems, umfassend zwei oder mehr Teile, zum Gebrauch in einem Verfahren zum Erhalten einer vernetzten Polymerzusammensetzung, umfassend das Herstellen eines ersten Teils, umfassend eine Monomerlösung A (Lösung A), die ein metathetisch polymerisierbares cyclisches Olefin und eine Metathesepolymerisation-Katalysatorlösung umfasst, gemäß dem Verfahren nach einem der Ansprüche 1 bis 5, wobei der zweite Teil eine Monomerlösung B (Lösung B) umfasst, die ein metathetisch polymerisierbares cyclisches Olefin und eine Alkylaluminiumaktivatorverbindung umfasst, worin die vernetzte Polymerzusammensetzung durch (1) Mischen der Lösungen A und B und (2) Polymerisieren und Vernetzen des Gemisches der Lösungen A und B in einer Form gebildet wird.

7. Verfahren nach Anspruch 6, wobei die Etherverbindung der Metathesepolymerisation-Katalysatorlösung eine Kettenetherverbindung ist.

8. Verfahren nach Anspruch 6, wobei die Alkylaluminiumaktivatorverbindung in Form einer Lösung zu dem metathetisch polymerisierbaren cyclischen Olefin zugegeben wird.

9. Verfahren zur Herstellung eines Systems, umfassend zwei oder mehr Teile, zum Gebrauch in einem Verfahren zum Erhalten einer vernetzten Polymerzusammensetzung, umfassend das Herstellen eines ersten Teils, umfassend eine Metathesepolymerisation-Katalysatorlösung, gemäß einem Verfahren nach einem der Ansprüche 1 bis 5, wobei der zweite Teil eine Metathesepolymerisation-Katalysatoraktivatorlösung umfasst, die ein metathetisch polymerisierbares cyclisches Olefin und eine Alkylaluminiumaktivatorverbindung umfasst, worin die vernetzte Polymerzusammensetzung gebildet wird durch:

(1) Mischen einer Monomerlösung A (Lösung A), umfassend ein metathetisch polymerisierbares cyclisches Olefin und der Katalysatorlösung, und einer Monomerlösung B (Lösung B), umfassend ein metathetisch polymerisierbares cyclisches Olefin und die Aktivatorlösung; und

(2) Polymerisieren und Vernetzen des Gemisches in einer Form.

10. Verfahren nach einem der Ansprüche 6 bis 9, worin die Metathesepolymerisation-Katalysatoraktivatorlösung weiter eine Kettenetherverbindung umfasst.

11. Verfahren nach Anspruch 10, worin die Etherverbindung der Metathesepolymerisation-Katalysatorlösung eine Kettenetherverbindung ist.

12. Verfahren nach einem der Ansprüche 6 bis 11, worin die Metathesepolymerisation-Katalysatorlösung mindestens eine Verbindung enthält, die durch die allgemeine Formel

$$WOCl_{(4-x)}(OPh)_x L_s \text{ und } MoOCl_{(3-x)}(OPh)_x L_s$$

dargestellt ist, worin x größer als 0 und weniger als oder gleich 3,0 ist, OPh eine Phenoxygruppe darstellt, die unsubstituiert oder mit mindestens einen Substituenten substituiert ist, ausgewählt aus der Gruppe, bestehend aus gesättigten Kohlenwasserstoffketten, ungesättigten Kohlenwasserstoffketten, alicyclischen gesättigten Kohlenwasserstoffen und alicyclischen ungesättigten Kohlenwasserstoffen, L einen Kettenether darstellt und s eine reale Zahl zwischen 1 und 3 ist.

13. Verfahren nach einem der Ansprüche 6 bis 12, worin die zwei oder mehr Teile kein anderes Lösungsmittel als ein metathetisch polymerisierbares cyclisches Olefin enthalten.

14. Verfahren zum Erhalten einer vernetzten Polymerzusammensetzung, umfassend das Mischen der Monomerlösung A und Monomerlösung B, wobei Lösung A und Lösung B gemäß einem der Ansprüche 6 bis 13 definiert sind, und Polymerisieren und Vernetzen des Gemisches der Lösungen A und B in einer Form.

15. Verfahren nach Anspruch 14, worin die vernetzte Polymerzusammensetzung eine massepolymerisierte vernetzte Polymerzusammensetzung ist.

**Revendications**

1. Procédé pour préparer une solution à catalyseur de polymérisation par métathèse qui fait partie d'un système à catalyseur de polymérisation par métathèse comprenant deux parties ou plus, à utiliser dans un procédé d'obtention d'une composition de polymère réticulé, dans lequel ladite composition de polymère réticulé est formée en :

   (1) mélangeant une solution de monomère A (solution A) comprenant une oléfine cyclique polymérisable par métathèse et un composé catalyseur dudit système à catalyseur de polymérisation par métathèse, et une solution de monomère B (solution B) comprenant une oléfine cyclique polymérisable par métathèse et un composé d'alkylaluminium en tant que composé activateur dudit système à catalyseur de polymérisation par métathèse ; et
   (2) polymérisant et réticulant ledit mélange dans un moule ;

   **caractérisé par** l'étape consistant à préparer la solution à catalyseur de polymérisation par métathèse en mélangeant un composé éthéré, un composé phénolique, une oléfine cyclique polymérisable par métathèse seule en tant que solvant et au moins l'un des $WOCl_4$ et $MoOCl_3$, dans lequel l'oléfine cyclique polymérisable par métathèse seule en tant que solvant et au moins l'un des $WOCl_4$ et $MoOCl_3$ sont mélangés en présence d'un composé éthéré.

2. Procédé selon la revendication 1, dans lequel le composé éthéré de la solution à catalyseur de polymérisation par métathèse est un composé éthéré à chaîne.

3. Procédé pour préparer une solution à catalyseur de polymérisation par métathèse qui fait partie d'un système à catalyseur de polymérisation par métathèse comprenant deux parties ou plus à utiliser dans un procédé d'obtention d'une composition de polymère réticulé, dans lequel ladite composition de polymère réticulé est formée en :

   (1) mélangeant une solution de monomère A (solution A) comprenant une oléfine cyclique polymérisable par métathèse et un composé catalyseur dudit système à catalyseur de polymérisation par métathèse, et une solution de monomère B (solution B) comprenant une oléfine cyclique polymérisable par métathèse et un composé d'alkylaluminium en tant que composé activateur dudit système à catalyseur de polymérisation par métathèse ; et
   (2) polymérisant et réticulant ledit mélange dans un moule ;

   **caractérisé par** la solution à catalyseur de polymérisation par métathèse comprenant une oléfine cyclique polymérisable par métathèse seule en tant que solvant et au moins un composé représenté par les formules générales :

$$WOCl_{(4-x)}(OPh)_x L_s \text{ et } MoOCl_{(3-x)}(OPh)_x L_s$$

   où x est supérieur à 0 et inférieur ou égal à 3,0, OPh représente un groupement phénoxy qui n'est pas substitué ou qui est substitué par au moins un substituant choisi parmi le groupe constitué des hydrocarbures à chaîne saturés, des hydrocarbures à chaîne insaturés, des hydrocarbures alicycliques saturés et des hydrocarbures alicycliques insaturés, L représente un éther à chaîne et s est un nombre réel de 1 à 3, et en mélangeant l'oléfine cyclique polymérisable par métathèse seule en tant que solvant avec au moins un composé représenté par lesdites formules en présence de l'éther à chaîne.

**4.** Procédé pour préparer une solution à catalyseur de polymérisation par métathèse selon l'une quelconque des revendications 1 à 3, dans lequel l'oléfin cyclique polymérisable par métathèse contenue dans la solution à catalyseur de polymérisation par métathèse en tant que solvant, est un ou plusieurs substituants choisis parmi le groupe constitué du dicyclopentadiène, du éthylidène norbornène et du tricyclopentadiène.

**5.** Procédé pour préparer une solution à catalyseur de polymérisation par métathèse selon l'une quelconque des revendications 1 à 4, dans lequel les solutions A et B ne contiennent pas de solvant autre qu'une oléfine cyclique polymérisable par métathèse.

**6.** Procédé pour préparer un système comprenant deux parties ou plus à utiliser dans un procédé d'obtention d'une composition de polymère réticulé, comprenant l'étape consistant à préparer une première partie comprenant une solution de monomère A (solution A) comprenant une oléfine cyclique polymérisable par métathèse et une solution à catalyseur de polymérisation par métathèse selon le procédé de l'une quelconque des revendications 1 à 5, ladite seconde partie comprenant une solution de monomère B (solution B) comprenant une oléfine cyclique polymérisable par métathèse et un composé activateur d'alkylaluminium, dans lequel ladite composition de polymère réticulé est formée en (1) mélangeant les solutions A et B, et (2) polymérisant et réticulant le mélange des solutions A et B dans un moule.

**7.** Procédé selon la revendication 6, dans lequel le composé éthéré de la solution à catalyseur de polymérisation par métathèse, est un composé éthéré à chaîne.

**8.** Procédé selon la revendication 6, dans lequel le composé activateur d'alkylaluminium est ajouté sous la forme d'une solution à l'oléfine cyclique polymérisable par métathèse.

**9.** Procédé pour préparer un système comprenant deux parties ou plus à utiliser dans un procédé d'obtention d'une composition de polymère réticulé, comprenant l'étape consistant à préparer une première partie contenant une solution à catalyseur de polymérisation par métathèse préparée selon le procédé de l'une quelconque des revendications 1 à 5, ladite seconde partie comprenant une solution à catalyseur de polymérisation par métathèse contenant une oléfine cyclique polymérisable par métathèse et un composé activateur d'alkylaluminium, dans lequel ladite composition de polymère réticulé est formée en :

   (1) mélangeant une solution de monomère A (solution A) comprenant une oléfine cyclique polymérisable par métathèse et la solution de catalyseur, et une solution de monomère B (solution B) comprenant une oléfine cyclique polymérisable par métathèse et l'activateur de solution ; et
   (2) polymérisant et réticulant ledit mélange dans un moule.

**10.** Procédé selon l'une quelconque des revendications 6 à 9, dans lequel la solution à activateur de catalyseur de polymérisation par métathèse, comprend en outre, un composé éthéré à chaîne.

**11.** Procédé selon la revendication 10, dans lequel le composé éthéré de ladite solution à catalyseur de polymérisation par métathèse, est un composé éthéré à chaîne.

**12.** Procédé selon l'une quelconque des revendications 6 à 11, dans lequel la solution à catalyseur de polymérisation par métathèse contient au moins un composé représenté par les formules générales :

$$WOCl_{(4-x)}(OPh)_x L_s \text{ et } MoOCl_{(3-x)}(OPh)_x L_s$$

dans lesquelles x est supérieur à 0 et inférieur ou égal à 3,0, OPh représente un groupement phénoxy qui n'est pas substitué ou qui est substitué par au moins un substituant choisi parmi le groupe constitué des hydrocarbures à chaîne saturés, des hydrocarbures à chaîne insaturés, des hydrocarbures alicycliques saturés et des hydrocarbures alicycliques insaturés, L représente un éther à chaîne et s est un nombre réel de 1 à 3.

**13.** Procédé selon l'une quelconque des revendications 6 à 12, dans lequel lesdites deux parties ou plus ne contiennent pas un solvant autre qu'une oléfine cyclique polymérisable par métathèse.

**14.** Procédé d'obtention d'une composition de polymère réticulé comprenant l'étape consistant à mélanger une solution de monomère A et une solution de monomère B, la solution A et la solution B étant définies selon l'une quelconque des revendications 6 à 13, et polymériser et réticuler le mélange des solutions A et B dans un moule.

15. Procédé selon la revendication 14 dans lequel la composition de polymère réticulé est une composition de polymère réticulé en masse.